Europäisches Patentamt

(19) European Patent Office

Office européen des brevets

(11) **EP 0 708 061 B1**

(12) **EUROPEAN PATENT SPECIFICATION**

(45) Date of publication and mention
of the grant of the patent:
**14.04.1999 Bulletin 1999/15**

(51) Int. Cl.$^6$: **C03C 11/00**, C03C 15/00,
C03C 23/00, C03C 25/00,
B01D 53/00

(21) Application number: **95307143.8**

(22) Date of filing: **10.10.1995**

(54) **Porous glass film with superfine pores, method of producing the same, and high-selectivity gas separation film**

Poröse Glasschicht mit sehr engen Poren, Verfahren zur dessen Herstellung und hochselektiver Gastrennungsfilm

Film en verre poreux avec des pores très fins, procédé pour sa fabrication et film pour la séparation de gaz à haute sélectivité

(84) Designated Contracting States:
**DE FR GB**

(30) Priority: **18.10.1994 JP 280091/94**

(43) Date of publication of application:
**24.04.1996 Bulletin 1996/17**

(73) Proprietor:
**AGENCY OF INDUSTRIAL SCIENCE &
TECHNOLOGY
MINISTRY OF INTERNATIONAL TRADE &
INDUSTRY
Tokyo (JP)**

(72) Inventors:
• **Yazawa, Tetsuo,
Osaka National Research Institute
8-31 Midorigaoka 1 chome Ikeda-shi Osaka (JP)**
• **Kuraoka, Koji,
Osaka National Research Institute
8-31 Midorigaoka 1 chome Ikeda-shi Osaka (JP)**

(74) Representative:
**Smith, Norman Ian et al
fJ CLEVELAND
40-43 Chancery Lane
London WC2A 1JQ (GB)**

(56) References cited:
**US-A- 4 978 641**

• **PATENT ABSTRACTS OF JAPAN vol. 012 no. 143 (C-492) ,30 April 1988 & JP-A-62 258704 (ASAHI GLASS CO LTD) 11 November 1987,**
• **PATENT ABSTRACTS OF JAPAN vol. 014 no. 475 (C-0770) ,17 October 1990 & JP-A-02 196035 (OHTSU TIRE & RUBBER CO LTD:THE) 2 August 1990,**
• **CHEMICAL ABSTRACTS, vol. 108, no. 12, 21 March 1988 Columbus, Ohio, US; abstract no. 99892, page 346; & DD-A-247 575 (AKADEMIE DER WISSENSCHAFTEN DER DDR) 15 July 1987**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to a porous glass film with superfine pores, a method of producing the porous glass film and a high-selectivity gas separation film comprising the porous glass film.

Among the different types of inorganic films, glass films enjoy the various properties peculiar to glass, including excellent heat resistance, chemical durability and weatherability. In addition, glass exhibits excellent film formability superior to that of other inorganic substances. Prior-art porous glass films with separation capability have pores which, at the very smallest, measure about 4 nm in diameter.

When these prior-art porous glass films are used to separate a particular gas from a mixed gas, the extent of the separation achieved is limited to that based on Knudsen flow. (When the pore diameter of the porous film is smaller than the mean free path of the gas being separated, the Knudsen flow is the gas flow at which the ideal separation ratio is equal to the square root of the reciprocal of the molecular weight. In the case of a hydrogen-nitrogen system, for example, the ideal separation ratio is 3.74.) The separation performance of the prior-art porous glass films is very poor even for helium, hydrogen and other such gases which should be relatively easy to separate, and they are incapable of providing any separation at all in the case of mixed gases of carbon dioxide and nitrogen or oxygen and nitrogen.

On the other hand, the need for a technology capable separating a specific gas from a mixture of gases with high selectivity has become more acute along with the increase in demand for high-purity gases in recent years.

Patent Abstracts of Japan, Vol. 014, no. 475 relating to JP-A-02 19 60 35 discloses a method of producing a superfine glass fibre in which the glass fibre is heated to cause phase separation of an acid-soluble phase and that phase is leached out in add to leave the porous structure.

The object of this invention is to respond to provide a novel method of produoing porous glass film with superline pores that exhibits high selectivity and superior separation performance.

Through research conducted in light of the prior art discussed in the foregoing, the inventors discovered that when a film of alkali silicate glass or other such glass containing alkali metal ions is leached with an add, the positive ions which are the alkali metal ions are readily removed from the glass to provide a glass film having superfine pores measuring not more than 1.5 nm in diameter. This invention was accomplished on the basis of this finding.

According to the present invention there is provided a method of producing a porous glass film which method comprises providing a glass film which contains alkali metal ions and leaching said glass film to remove the alkali ions thereby to produce porosity corresponding to the original sites of the leached metal ions and consisting of superfine pores having a maximum diameter of 1.5 nm, which method is carried out in the absence of a phase separation heat treatment step to produce an acid soluble phase in said glass. There is also provided a porous glass film produced by this method, and a high-selectivity gas separation film comprising the porous film.

Since the porous glass film obtained by the method of this invention has superfine pores with diameters not exceeding 1.5 nm, its gas separation performance is dramatically better than that of many prior-art porous glass films. For instance, it has 500 to 1,000 times better hydrogen and helium separation performance than many prior-art porous glass films and also exhibits excellent performance in separating $CH_4$ from a $CO_2$-$CH_4$ mixture. It can also separate carbon dioxide-nitrogen mixed gas, oxygen-nitrogen mixed gas and other such mixed gases which cannot be separated using conventional porous glass films.

From the practical point of view, the porous glass film of this invention is also useful for separating hydrogen from a nitrogen-hydrogen mixed gas (when applied to a membrane reactor) and for separating (removing) carbon dioxide from a nitrogen-carbon dioxide mixed gas (when applied for environmental protection).

The superior heat resistance, chemical durability, weatherability and film formability properties of an inorganic film that are enjoyed by the porous glass film according to the invention combine with its excellent gas separation performance to make it outstandingly useful as a gas separation film.

Glasses containing alkali metal ions that can be processed into porous glass film with superfine pores according to the invention include alkaline silicate glasses represented by $xSiO_2 \cdot R_2O$ (where R indicates Li, Na, K, Cs or Rb and x is 2.5 - 4.0 and is preferably 3.5), alkali silicate glasses, alkali borosilicate glasses and aluminoborosilicate glasses.

Acids usable for leaching the glass to dissolve out the alkali metal ions include hydrochloric acid, nitric acid, sulfuric acid, acetic acid, phosphoric acid and the like.

The conditions of leaching the glass with acid are not particularly defined. The acid concentration, temperature and treatment period can be appropriately selected so as to selectively remove the alkali metal ions from the particular glass being treated. For example, leaching of an alkaline silicate glass with hydrochloric acid can be conducted at an acid concentration of about 1 - 5 **M** and a temperature in the approximate range of 50 - 100 °C for a period of around 0.5 - 200 hr. Substantially the same conditions can be used for leaching an alkali borosilicate glass with hydrochloric acid.

The conditions under which the invention porous glass is used for gas separation are not particularly defined. The same conditions as used with prior-art porous glass films are acceptable.

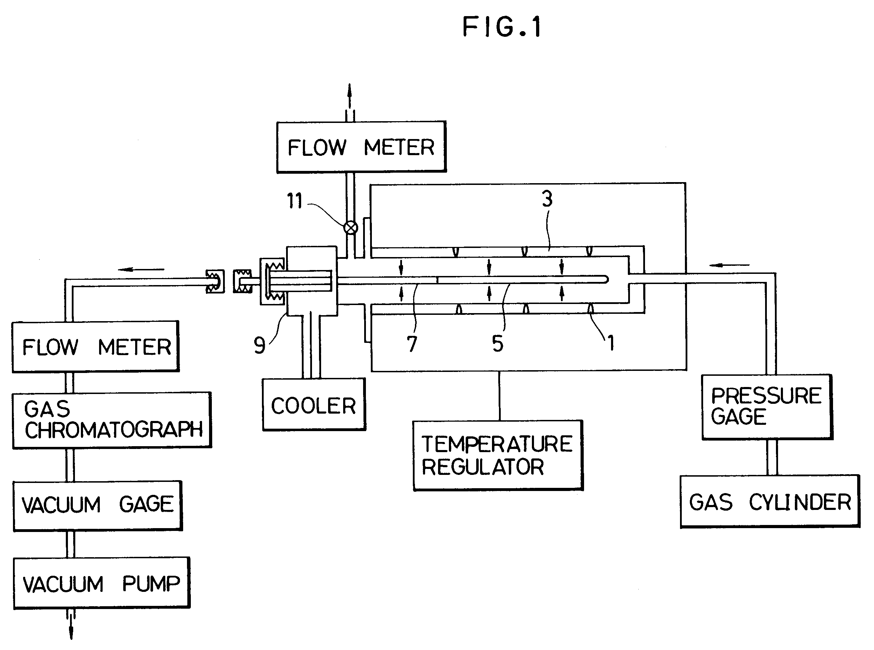

This invention will now be described in more detail based on specific working examples, with reference to the accompanying single drawing which is a block diagram of an apparatus incorporating a porous glass film with superfine pores according to the invention.

Examples:

Example 1.

A tube formed from 0.5 mm-thick alkali silicate glass composed of $3SiO_2 \cdot Na_2O$ to have an inside diameter of 4 mm and an outside diameter of 5 mm was leached at 70 °C for 24 hr using 3 **M** hydrochloric acid. Atomic absorption analysis showed that the alkali components were dissolved out of the glass almost completely.

As a result, there was obtained a porous glass tube with superfine pores of a diameter not exceeding 1.5 nm. This tube was used to construct an apparatus whose general configuration is as shown in the drawing. The apparatus is designed for passing gas from a gas cylinder in the direction indicated by the arrows in the drawing.

Specifically, gas passing from the gas cylinder through a pressure gage and into a stainless steel core tube 3 equipped with a heater 1 reaches the outer wall of the porous glass tube (designated by reference numeral 5 in the drawing) disposed inside the core tube 3 and a gas component thereof permeates through the wall of the porous glass tube 5 into its interior. The gas component inside the porous glass tube 5 passes through an ordinary glass tube 7, a water-cooled jacket 9 cooled by cold water from a cooler, a flow meter, a gas chromatograph, a vacuum gage and a vacuum pump to be collected on the discharge side of the vacuum pump. The gas component outside the porous glass tube 5 passes out of the system through a gas discharge nozzle 11 and another flow meter.

The permeation velocity of the gas through the porous glass in a given ambience varies with the kind of gas and the diameter of the pores.

In this example, the apparatus shown in the drawing was used to measure the permeation velocity ratio of hydrogen, helium, $CO_2$, $O_2$, $N_2$ and $CH_4$ at a temperature of 30 °C and a gas pressure of 2 kg/cm$^2$.

The permeation velocity $PH_2$ of hydrogen was:

$$PH_2 = 3.5 \times 10^{-6} \text{ cm}^3 \text{ (STP)/cm}^2 \cdot s \cdot cm \text{ Hg.}$$

The permeation velocity ratios of the different gases is shown in the following table.

Table 1

| B/A | He | $H_2$ | $CO_2$ | $O_2$ | $N_2$ |
|---|---|---|---|---|---|
| $H_2$ | 2.5 (0.71) | | | | |
| $CO_2$ | 7.3 (3.32) | 2.7 (4.69) | | | |
| $O_2$ | 80 (2.83) | 30 (4.00) | 8.3 (0.85) | | |
| $N_2$ | 700 | 120 | 43 | 3.4 | |
| $CH_4$ | 1205 (2.0) | 2005 (2.83) | 1601 (0.60) | 165 (0.71) | 50 (0.76) |

The figures in parentheses are the permeation velocity ratios of a prior-art porous glass with 4 nm pores under the same conditions.

If, for example, a mixture of two gases is treated under the same conditions as in this Example, the gas with the larger permeation velocity will pass through the film with a selectivity that is higher in proportion to the extent by which its permeation velocity is larger.

Example 2.

The apparatus was operated to measure the permeation velocities of different gases in the same manner as in Example 1 except that the temperature was change to 250 °C. The permeation velocity ratio of the gases is shown in Table 2.

Table 2

| B/A | He | $CO_2$ | $O_2$ | $N_2$ |
|---|---|---|---|---|
| $CO_2$ | 5.8 | | | |
| $O_2$ | 9.3 | 2.0 | | |
| $N_2$ | 35 | 13.5 | 3.8 | |
| $CH_4$ | 270 | 65 | 31 | 9.5 |

The results shown in Table 2 clearly demonstrate that the porous glass film according to the invention exhibits excellent performance as a gas separation film even at a high temperature of 250 °C.

Example 3.

The permeation velocities of different gases were measured in the same manner as in Example 1 except that the glass containing alkali ions used was an aluminoborosilicate glass composed of 53.0 wt% $SiO_2$, 24.5 wt% $B_2O_3$, 8.0 wt% CaO), 6.0 wt% $ZrO_2$, 5.5 wt% $Na_2O$ and 3 wt% $Al_2O_3$. The gas permeation velocity ratios calculated in the same manner as in Example 1 are shown in Table 3.

Table 3

| B/A | He | $H_2$ | $CO_2$ | $O_2$ | $N_2$ |
|---|---|---|---|---|---|
| $H_2$ | 2.4 | | | | |
| $CO_2$ | 7.0 | 2.1 | | | |
| $O_2$ | 31 | 33 | 6.2 | | |
| $N_2$ | 630 | 84 | 28 | 30 | |
| $CH_4$ | 825 | 1203 | 1101 | 121 | 43 |

Example 4.

Hollow fibers formed from the same type of glass as used in Example 1 to have an outside diameter of 30 $\mu$m and an inside diameter of 20 $\mu$m was leached at 70 °C for 30 min using 3 **M** hydrochloric acid.

One hundred of the porous glass hollow fibers obtained in this manner were bundled, sealed at both ends, and set as a module in the stainless steel core tube 3 shown in the drawing. The apparatus was operated to measure the permeation velocities of different gases in the same manner as in Example 1. The gas permeation velocity ratios calculated in the same manner as in Example 1 are shown in Table 4.

Table 4

| B/A | He | $H_2$ | $CO_2$ | $O_2$ | $N_2$ |
|---|---|---|---|---|---|
| $H_2$ | 2.7 | | | | |
| $CO_2$ | 7.8 | 2.9 | | | |
| $O_2$ | 86 | 32 | 7.7 | | |
| $N_2$ | 703 | 115 | 53 | 3.9 | |
| $CH_4$ | 1504 | 1806 | 1509 | 173 | 173 |

The permeation velocity $PH_2$ of hydrogen in this Example was:

$$PH_2 = 8.7 \times 10^{-4} \, cm^3 \, (STP)/cm^2 \cdot s \cdot cm \, Hg.$$

From the fact that in Example 1 PH$_2$ was 3.5 x 10$^{-6}$ cm$^3$ (STP)/cm$^2$ · s · cm Hg, it can be seen that the use of hollow fibers increased the gas permeation velocity 100 fold.

By enabling the production of porous glass films with pores not exceeding 1.5 nm in diameter, the invention thus makes it possible to separate a specific gas from a mixture of different gases with high selectivity.

Example 5.

In Examples 1 - 4, the excellent separation performance of the films was verified by measuring the permeation velocities of different gases and calculating the permeation velocity ratios of the gases to be mixed.

This Example relates to the use of an actual mixed gas.

Helium and methane were charged into a gas cylinder at a molar ratio of 50 : 50 and the charged gas was treated by the apparatus shown in the drawing using the same porous glass tube as in Example 1 under the same conditions as in Example 1.

The molar ratios of the helium and methane contained in the gas collected from the porous glass tube were 99.9 and 0.1, respectively.

Comparative Example 1.

The apparatus was operated in the same manner as in Example 5 except for using a porous glass tube with a minimum pore diameter of 4 nm.

The molar ratios of the helium and methane contained in the gas collected from the porous glass tube were 66.7 and 33.3, respectively.

This result shows that helium was selectively separated at high yield in Example 5 conducted according to the invention.

Claims

1. A method of producing a porous glass film which method comprises providing a glass film which contains alkali metal ions and leaching said glass film to remove the alkali ions thereby to produce porosity corresponding to the original sites of the leached metal ions and consisting of superfine pores having a maximum diameter of 1.5 nm, which method is carried out in the absence of a phase separation heat treatment step to produce an acid soluble phase in said glass.

2. A method as claimed in claim 1 characterised in that the glass has as its substantial main component xSiO$_2$.R$_2$O, where R indicates Li, Na, K, Cs or Rb and x is 2.5 - 4.0.

3. A method as claimed in claim 1 or claim 2 characterised in that the glass is selected from among alkali silicate glass, alkali borosilicate glass and aluminoborosilicate glass.

4. A method as claimed in any preceding claim characterised in that the acid is selected from among hydrochloric acid, nitric acid, sulphuric acid, acetic acid and phosphoric acid.

5. A method as claimed in any preceding claim characterised in that the glass film is in the form of hollow fibres.

6. A method of producing a glass film suitable for use as a high-selectivity gas separation film comprising a method as claimed in any preceding claim.

7. A method as claimed in any preceding claim wherein the film is in the form of hollow fibers.

Patentansprüche

1. Verfahren zum Herstellen eines porösen Glasfilms mit Vorsehen eines Alkalimetallionen enthaltenden Glasfilms und Auswaschen des Glasfilms zum Entfernen der Alkaliionen zwecks Erzeugung von Porosität an den ursprünglichen Stellen der ausgewaschenen Metallionen mit feinsten Poren mit einem Maximaldurchmesser von 1,5 nm, wobei das Verfahren zwecks Erzeugung einer sauren löslichen Phase in dem Glas ohne den Schritt einer Phasentrenn-Wärmebehandlung durchgeführt wird.

2. Verfahren nach Anspruch 1, dadurch **gekennzeichnet**, daß das Glas als weitgehende Hauptkomponente

xSiO$_2$.R$_2$O enthält, wobei R für Li, Na, K, Cs oder Rb steht und x den Wert 2,5 - 4,0 hat.

3. Verfahren nach Anspruch 1 oder 2, dadurch **gekennzeichnet**, daß das Glas Alkalisilikatglas, Alkaliborosilikatglas oder Aluminoborosilikatglas ist.

4. Verfahren nach einem der vorhergehenden Ansprüche, dadurch **gekennzeichnet**, daß die Säure Salzsäure, Salpetersäure, Schwefelsäure, Essigsäure oder Phosphorsäure ist.

5. Verfahren nach einem der vorhergehenden Ansprüche, dadurch **gekennzeichnet**, daß der Glasfilm aus Hohlfasern besteht.

6. Verfahren zum Herstellen eines als hochselektiver Gastrennungsfilm geeigneten Glasfilms mit einem Verfahren gemäß einem der vorhergehenden Ansprüche.

7. Verfahren nach einem der vorhergehenden Ansprüche, dadurch **gekennzeichnet**, daß der Film aus Hohlfasern besteht.

**Revendications**

1. Procédé de production d'un film en verre poreux, lequel procédé comprend la fourniture d'un film en verre qui contient des ions de métaux alcalins et la lixiviation dudit film en verre pour retirer les ions alcalins, pour produire, de ce fait, une porosité correspondant aux sites originaux des ions métalliques lixiviés et consistant en des pores très fins ayant un diamètre maximum de 1,5 nm, lequel procédé est réalisé en l'absence d'une étape de traitement thermique de séparation de phase pour produire une phase soluble acide dans ledit verre.

2. Procédé selon la revendication 1, caractérisé en ce que le verre a comme composant principal xSiO$_2$.R$_2$O, où R indique Li, Na, K, Cs ou Rb et x est compris entre 2,5 et 4,0.

3. Procédé selon la revendication 1 ou la revendication 2, caractérisé en ce que le verre est sélectionné parmi les verres de silicate d'alcalin, les verres de borosilicate d'alcalin et les verres d'aluminoborosilicate.

4. Procédé selon l'une quelconque des revendications précédentes, caractérisé en ce que l'acide est sélectionné parmi l'acide chlorhydrique, l'acide nitrique, l'acide sulfurique, l'acide acétique et l'acide phosphorique.

5. Procédé selon l'une quelconque des revendications précédentes, caractérisé en ce que le film en verre se trouve sous la forme de fibres creuses.

6. Procédé de production d'un film en verre approprié pour être utilisé comme un film de séparation de gaz a haute sélectivité comprenant un procédé tel que revendiqué dans l'une quelconque des revendications précédentes.

7. Procédé selon l'une quelconque des revendications précédentes, dans lequel le film se trouve sous la forme de fibres creuses.

# FIG.1

FLOW METER

11

3

FLOW METER

GAS
CHROMATOGRAPH

9

7    5    1

VACUUM GAGE

COOLER

TEMPERATURE
REGULATOR

PRESSURE
GAGE

VACUUM PUMP

GAS CYLINDER

EP 0 708 061 B1